**Europäisches Patentamt**

**European Patent Office**

**Office européen des brevets**

(19)

(11) Veröffentlichungsnummer: **0 008 608**
**B2**

(12) # NEUE EUROPÄISCHE PATENTSCHRIFT

(45) Veröffentlichungstag der neuen Patentschrift:
23.04.86

(51) Int. Cl.⁴: **H 04 L 11/08, H 04 L 5/14,
H 04 L 25/00**

(21) Anmeldenummer: **79101782.5**

(22) Anmeldetag: **06.06.79**

(54) **Schaltungsanordnung zur Durchführung eines Schleifentests für Datenübertragungsstrecken.**

(30) Priorität: **06.09.78 DE 2838816**

(43) Veröffentlichungstag der Anmeldung:
**19.03.80 Patentblatt 80/6**

(45) Bekanntmachung des Hinweises auf die Patenterteilung:
**24.03.82 Patentblatt 82/12**

(45) Bekanntmachung des Hinweises auf die Entscheidung
über den Einspruch:
**23.04.86 Patentblatt 86/17**

(84) Benannte Vertragsstaaten:
**AT BE CH DE FR GB IT LU NL SE**

(56) Entgegenhaltungen:
**AT - B - 329 641
DE - A - 1 949 792
DE - B - 1 064 552
DE - B - 1 168 506
GB - A - 1 510 498
US - A - 3 934 224**

**Siemens Zeitschrift 42 (1968), Heft 3, Seiten 161-167**

(73) Patentinhaber: **Felten & Guilleaume Fernmeldeanlagen
GmbH, Thurn-und-Taxis-Strasse 10 Postfach 4943,
D-8500 Nürnberg 10 (DE)**

(72) Erfinder: **Parras, Karlheinz, Dipl.-Ing., Wilhelm
Späth-Strasse 8, D-8500 Nürnberg (DE)**
Erfinder: **Dupont, Helmut, Dipl.-Ing., Lilienstrasse 7,
D-8501 Eckental (DE)**
Erfinder: **Bader, Edgar, Dipl.-Ing., Parkstrasse 9,
D-8501 Rückersdorf (DE)**

(74) Vertreter: **Peuckert, Hermann, Philips Patentverwaltung
GmbH Billstrasse 80 Postfach 10 51 49,
D-2000 Hamburg 28 (DE)**

# Beschreibung

Die Erfindung bezieht sich auf eine Anordnung zur Durchführung eines Schleifentests für Datenübertragungsstrecken, auf denen in einer Richtung synchron mit einer hohen Übertragungsgeschwindigkeit und in der Gegenrichtung asynchron nur mit einer niedrigen Übertragungsgeschwindigkeit übertragen werden kann. Der Schleifentest soll über die Güte der jeweiligen Datenübertragungsstrecke Aufschluss geben.

Bei Datenübertragungsstrecken mit Vollduplexbetrieb kann eine Schleifenschaltung für eine Testübertragung in der Weise hergestellt werden, dass von der einen testenden Station ein bestimmtes Testsignal zur Gegenstation ausgesendet und das am Empfängerausgang der Gegenstation erhaltene Signal zum Sendereingang dieser Station durchgeschleift und über den anderen Übertragungskanal wieder zur testenden Station zurückgesendet wird. Einen Aufschluss über die Güte der aus den beiden Übertragungskanälen gebildeten Strecke, beispielsweise über die Fehlerrate, erhält man durch Vergleich des am Empfängerausgang der testenden Station erscheinenden Signals mit dem ursprünglichen, am Sendereingang dieser Station anliegenden Testsignal.

Ein derartiger Schleifentest stösst jedoch auf Schwierigkeiten, wenn die beiden Übertragungskanäle für Übertragungsgeschwindigkeiten ausgelegt sind, die stark voneinander abweichen. So existieren beispielsweise Datenübertragungsstrecken, die in abgehender Richtung einen schnellen Kanal für maximal 1200 bit/s und in Gegenrichtung einen langsamen Kanal für maximal 75 bit/s aufweisen. Die Übertragung über den schnellen Kanal kann dabei synchron in einem bestimmten Taktraster oder auch asynchron erfolgen. Bei solchen Datenübertragungsstrecken kann der oben beschriebene Schleifentest nur mit einer Übertragungsgeschwindigkeit durchgeführt werden, die sich auf die niedrige Übertragungsgeschwindigkeit des langsamen Kanals beschränkt. Dabei tritt jedoch der Nachteil auf, dass der schnelle Kanal nicht unter realistischen Bedingungen getestet wird. So werden bei einem derartigen Test beispielsweise Übertragungsfehler, welche erst bei hohen Übertragungsgeschwindigkeiten auftreten, nicht erkannt.

Der Erfindung liegt die Aufgabe zugrunde, eine Schaltungsanordnung für einen Schleifentest bei einer Übertragungsstrecke anzugeben, bei welcher der schnelle, von der testenden zur Gegenstation führenden Kanal für eine um den Faktor p höhere Übertragungsgeschwindigkeit ausgelegt ist als der langsame Kanal in Gegenrichtung. Die Übertragung über den schnellen Kanal soll dabei synchron in einem bestimmten Taktraster und in Gegenrichtung asynchron erfolgen. Die Schaltungsanordnung soll sehr einfach sein und gewährleisten, dass der Test für beide Kanäle möglichst unter Betriebsbedingungen erfolgt.

Die Erfindung geht dabei von einem periodischen Testsignal aus. Ein solches periodisches Testsignal ist beispielsweise der in der CCITT-Empfehlung V 52 vorgeschlagene Pseudozufallstext. Dieser Zufallstext weist eine Periode von 511 Schritten auf.

Die Aufgabe wird erfindungsgemäss dadurch gelöst, dass die Übertragung eines Testsignals, welches entsprechend dem Bildungsgesetz der in der CCITT-Empfehlung V52 vorgeschlagenen Zufallsfolge gebildet ist, von der testenden Station zur Gegenstation mit der maximal möglichen Übertragungsgeschwindigkeit erfolgt, dass der Empfängerausgang der Gegenstation den Signaleingang einer Auswahlschaltung und der Ausgang dieser Auswahlschaltung den Sendereingang der Gegenstation ansteuert, wobei die Auswahlschaltung nur jeden p-ten Schritt ihres Eingangssignals zum Ausgang überträgt und wobei das zur testenden Station zurückgesendete definierte Ausgangssignal der Auswahlschaltung eine kürzeste Schrittdauer aufweist, welche etwa der maximal möglichen Übertragungsgeschwindigkeit des von der Gegenstation zur testenden Station führenden Kanals entspricht.

Im folgenden soll die Erfindung anhand eines Ausführungsbeispiels näher beschrieben und erläutert worden. Dieses Ausführungsbeispiel bezieht sich auf einen Schleifentext für eine Datenübertragungsstrecke, bei der die Übertragung von der testenden Station zur Gegenstation synchron mit der maximal möglichen Geschwindigkeit von 1200 bit/s und in Gegenrichtung asynchron mit maximal 75 bit/s erfolgt. Es zeigen:

Fig. 1 das Prinzipschaltbild für einen Schleifentest für die genannte Datenübertragungsstrecke,
Fig. 2 eine prinzipielle Schaltungsanordnung für die Auswahlschaltung gemäss Fig. 1,
Fig. 3 das Zeitdiagramm zur Erklärung der Wirkungsweise der Auswahlschaltung gemäss Fig. 2.

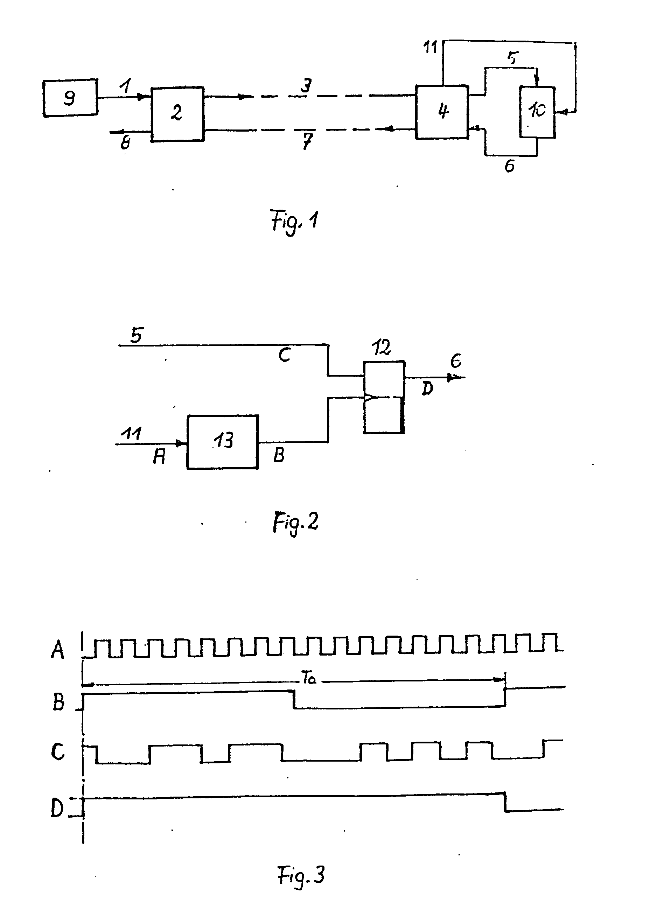

Der Testsignal-Generator 9 liefert das rechteckförmige Testsignal wie in Fig. 1 dargestellt an den Sendereingang 1 der testenden Station 2. Letztere sendet dieses Testsignal mit Hilfe eines Modems über den von etwa 1,1...2,3 kHz reichenden schnellen Übertragungskanal 3 zur Gegenstation 4. Der Empfängerausgang 5 dieser Station 4, an dem das Testsignal wieder rechteckförmig auftritt, steuert den Signaleingang der Auswahlschaltung 10 an. Der Taktausgang 11 dieser Station 4 ist mit dem Takteingang der Auswahlschaltung 10 verbunden. Die Auswahlschaltung 10 steuert mit ihrem Ausgang den Sendereingang 6 der Station 4 an. Die Auswahlschaltung 10 schaltet dabei jeweils im Rhythmus der Periodendauer Ta einen Signalschritt des vom Empfängerausgang 5 gelieferten Testsignals zum Sendereingang 6 durch, wobei die durchgeschalteten Signalschritte jeweils auf die Dauer Ta verlängert werden. Die Periodendauer Ta entspricht dabei der maximalen Übertragungsgeschwindigkeit des langsamen Kanals 7. Die Station 4 sendet das von der Auswahlschaltung 10 gelieferte Signal über den im Frequenzbereich 420 Hz ± 37,5 Hz liegenden Übertragungskanal 7 zur Station 2 zurück. Am Empfängerausgang 8 der Station 2 erscheint dieses zurückgesendete Signal in rechteckiger Form.

Die Auswahlschaltung 10 schaltet jeden p-ten Signalschritt ihres Eingangssignals zum Ausgang durch. Der Wert p ergibt sich dabei aus dem Verhältnis von maximaler Übertragungsgeschwindigkeit des schnellen Kanals 3 zur derjenigen des langsamen Kanals 7. Beim Ausführungsbeispiel ergibt sich p = 16 als Quotient der eingangs erwähnten Werte für die Übertragungsgeschwindigkeiten.

Bei Datenübertragungsstrecken, bei denen die maximalen Übertragungsgeschwindigkeiten für die beiden Übertragungskanäle kein ganzes Verhältnis bilden, ist der Wert für p so zu wählen, dass die maximale Übertragungsgeschwindigkeit für den Kanal 7 möglichst angenähert wird.

Das vom Testsignal-Generator 9 ausgesendete Testsignal entspricht beim Ausführungsbeispiel dem in der CCITT-Empfehlung V52 vorgeschlagenen Pseudozufallstext. Dieser Text ist so beschaffen, dass die Folge jedes sechzehnten Schritts einen Text ergibt, der wieder die ursprüngliche Folge aufweist. Die Verwendung eines derartigen Testsignals hat daher den Vorteil, dass zur Prüfung des am Empfängerausgang 8 der Station 2 erscheinenden Signals handelsübliche, für den genannten CCITT-Text ausgelegte Geräte verwendet werden können. Dies gilt auch für den Fall, dass der Kanal 3 eine Übertragungsgeschwindigkeit von 2400 bit/s aufweist, da auch die Folge jedes zweiunddreissigsten Schritts des CCITT-Textes wieder die ursprüngliche Folge ergibt.

In Fig. 2 ist für die Auswahlschaltung 10 eine mögliche Schaltungsanordnung angegeben. Diese Schaltungsanordnung besteht aus einer bistabilen Kippstufe 12, deren Vorbereitungseingang den Signaleingang der Auswahlschaltung 10 bildet. Der Takteingang dieser bistabilen Kippstufe 12 ist mit dem Ausgang des Frequenzteilers 13 verbunden. Der Eingang dieses Frequenzteilers 13 bildet den Takteingang der Auswahlschaltung 10. Der Ausgang der bistabilen Kippstufe 12 bildet den Ausgang der Auswahlschaltung 10.

In Fig. 3, Zeile A ist der am Taktausgang 11 der Station 4 auftretende Schritt-Takt des empfangenen Testsignals dargestellt. Dieser Schritt-Takt liegt gleichzeitig am Eingang des Frequenzteilers 13 an. In Zeile B ist das Ausgangssignal des Frequenzteilers 13 dargestellt. Dieses Ausgangssignal ist gegenüber dem Eingangssignal um den Faktor p = 16 heruntergeteilt und weist die Periodendauer Ta auf. Zeile C zeigt einen Ausschnitt des von der Station 4 empfangenen Testsignals, welches gleichzeitig am Vorbereitungseingang der bistabilen Kippstufe 12 anliegt. Mit den positiven Flanken des Taktes gemäss Zeile B wird der Binärzustand jedes sechzehnten Signalschritts dieses am Vorbereitungseingang anliegenden Signals vom Ausgang der bistabilen Kippstufe 12 übernommen. Der Verlauf dieses am Ausgang der Kippstufe 12 anliegenden Signals ist für den betrachteten Zeitraum in Zeile D dargestellt. Dieses Signal weist die zur Übertragung über den Kanal 7 geforderte Schrittgeschwindigkeit von 75 bit/s auf.

Die Erfindung lässt sich in besonders vorteilhafter Weise einsetzen, wenn eine grosse Anzahl von Datenstationen von einer Zentrale aus versorgt und getestet wird. Ein solcher Anwendungsfall ist beispielsweise der Bildschirmtext-Dienst. In diesem Fall wird der Aufwand für die Testmustererzeugung und die Fehlerauswertung vollständig in die zentrale Station verlegt.

Im Prinzip lässt sich bei der Erfindung anstelle des CCITT-Textes jedes beliebige periodische Testmuster verwenden. In diesem Fall muss lediglich dafür gesorgt werden, dass das Testmuster an der Station 2 an einem bestimmten definierten Punkt gestartet wird.

## Patentansprüche

1. Schaltungsanordnung für einen Schleifentest für eine Datenübertragungsstrecke, bei welcher der von der testenden Station zur Gegenstation führende Übertragungskanal für eine um den Faktor p höhere Übertragungsgeschwindigkeit ausgelegt ist als der Kanal in Gegenrichtung, wobei die Übertragung zur Gegenstation synchron in einem bestimmten Taktraster und in Gegenrichtung asynchron erfolgt, dadurch gekennzeichnet, dass die Übertragung eines Testsignals, welches entsprechend dem Bildungsgesetz der in der CCITT-Empfehlung V52 vorgeschlagenen Zufallsfolge gebildet ist, von der testenden Station (2) zur Gegenstation (4) mit der maximal möglichen Übertragungsgeschwindigkeit erfolgt, dass der Empfängerausgang (5) der Gegenstation den Signaleingang einer Auswahlschaltung (10) und der Ausgang dieser Auswahlschaltung (10) den Sendereingang (6) der Gegenstation (4) ansteuert, wobei die Auswahlschaltung (10) nur jeden p-ten Schritt ihres Eingangssignals zum Ausgang überträgt und wobei das zur testenden Station (2) zurückgesendete definierte Ausgangssignal der Auswahlschaltung (10) eine kürzeste Schrittdauer aufweist, welche etwa der maximalen Übertragungsgeschwindigkeit des von der Gegenstation zur testenden Station führenden Kanals entspricht.

2. Schaltungsanordnung nach Anspruch 1, dadurch gekennzeichnet, dass die Auswahlschaltung (10) einen Frequenzteiler (13) enthält, an dessen Eingang der Schritt-Takt des von der Gegenstation (4) empfangenen Testsignals und dessen Ausgang mit dem Takteingang einer bistabilen Kippstufe (12) verbunden ist, wobei der Vorbereitungseingang dieser bistabilen Kippstufe (12) den Signaleingang und der Ausgang dieser Kippstufe (12) den Ausgang der Auswahlschaltung (10) bildet.

## Claims

1. A circuit arrangement for a loop test in a data transmission route on which the transmission channel from the testing station to the opposite station is designed for a transmission rate higher by the factor p than that of the channel in the opposite direction, the transmission to the opposite station being performed synchronously within a specific clock frame, and asynchronously in the opposite direction, characterized in that the transmission of a test signal, which is formed in accordance with the formation law of the random sequence proposed in the CCITT Recommendation V52, from the testing station (2) to the opposite station (4) is performed with the maximum possible transmission speed, the receiver output (5) of the opposite station drives the signal input of a selecting circuit (10) and the output of this selecting circuit (10) drives the transmitter input (6) of the opposite station (4), the selecting circuit (10) transmitting only each p-th signal element of its input element to the output and the defined output signal of the selecting circuit (10) sent back to the testing station (2) having a shortest signal element length corresponding approximately to the maximum transmission speed of the channel from the opposite station to the testing station.

2. A circuit arrangement as claimed in Claim 1, characterized in that the selecting circuit (10) includes a frequency divider (13) at whose input the signal-element clock of the test signal received by the opposite station (3) is applied and whose output is connected to the clock input of a bistable flip-flop (12), the enable input of this flip-flop (12) constituting the signal input, and the output of the flip-flop (12) constituting the output of the selecting circuit (10).

**Revendications**

1. Montage pour essai en boucle pour un parcours de transmission de données, dans lequel le canal de transmission de données conduisant du poste essayeur au poste opposé est conçu pour une vitesse de transmission p fois plus grande que le canal en sens opposé, la transmission au poste opposé s'effectuant de façon synchrone dans une grille de rythme déterminée et la transmission en sens opposé de façon asynchrone, caractérisé en ce que la transmission d'un signal, qui est formé conformément à la succession aléatoire proposée dans la recommandation CCITT V52, du poste essayeur (2) au poste opposé (4) s'effectue à la vitesse maximale de transmission possible, en ce que la sortie de récepteur (5) du poste opposé adresse l'entrée de signal d'un circuit sélecteur (10), et la sortie de ce circuit sélecteur (10) adresse l'entrée d'émetteur (6) du poste opposé, le circuit sélecteur (10) ne transmettant à la sortie qu'un sur p des éléments de son signal d'entrée et le signal de sortie défini du circuit sélecteur (10), renvoyé au poste essayeur (2), présente une durée minimale d'éléments qui correspond à peu près à la vitesse maximale de transmission du canal conduisant du poste opposé au poste essayeur.

2. Montage selon la revendication 1, caractérisé en ce que le circuit sélecteur (10) contient un diviseur de fréquence (13), à l'entrée duquel est relié le rythme d'éléments du signal d'essai reçu par le poste opposé (4) et dont la sortie est reliée à l'entrée de rythme d'une bascule bistable (12), l'entrée de préparation de cette bascule bistable (12) formant l'entrée de signal et la sortie de cette bascule (12), la sortie du circuit sélecteur (10).

Fig. 1

Fig. 2

Fig. 3